# EUROPÄISCHE PATENTANMELDUNG

(11) **EP 0 860 618 A1**
(43) Veröffentlichungstag der Anmeldung: **26.08.1998**
(21) Anmeldenummer: 98102714.7
(22) Anmeldetag: 17.02.1998
(51) Int. Cl.: F16C 1/22

(54) **Vorrichtung zum Übertragen einer Bewegung und/oder Kraft**

(30) Priorität: 25.02.1997 DE 19707517
(71) Anmelder: R. SCHMIDT GMBH, 57368 Lennestadt (DE)
(72) Erfinder: Padberg, Christoph, 57368 Lennestadt-Oedingen (DE); Wüstholz, Bernd, 57439 Attendorn (DE)
(74) Vertreter: Nöth, Heinz, Dipl.-Phys.

(57) **Zusammenfassung**

Eine Vorrichtung zum Übertragen einer Bewegung und/oder Kraft mit einer Führungseinrichtung (1-3) und einem Übertragungselement (4), welches in der Führungseinrichtung mit Führungseingriff (Formschluß) verschiebbar gelagert ist und die Bewegung und/oder Kraft entlang einer durch die Enden (7,8) der Führungseinrichtung bestimmten Führungslänge überträgt, wobei die Führungslänge zwischen den beiden Enden (7,8) durch Freigabe des Führungseingriffes entlang einer bestimmten Strecke der Führungslänge variabel ausgebildet ist.

## Beschreibung

Die Erfindung betrifft eine Vorrichtung zum Übertragen einer Bewegung und/oder Kraft mit einer Führungseinrichtung und einem Übertragungselement, welches in der Führungseinrichtung mit Führungseingriff (Formschluß) verschiebbar gelagert ist und die Bewegung und/oder Kraft entlang einer durch die Enden der Führungseinrichtung bestimmten Führungslänge überträgt.

Eine derartige Vorrichtung ist als Bowdenzug bekannt, bei dem Bewegungen und Kräfte durch einen Draht, der in einer als flexibler Schlauch ausgebildeten Führungseinrichtung verschiebbar ist, übertragen werden. Es auch bekannt, statt des Drahtes eine dünne durch Kugeln geführte Stahlschiene zu verwenden, so daß die Bewegungen und Kräfte mit Rollreibung statt Gleitreibung übertragen werden können. Die Führungseinrichtung (Schlauch) ist in aller Regel als biegsame Hülle ausgebildet. Auch das drahtförmige oder seilförmige Übertragungselement, welches in der Führungseinrichtung verschiebbar geführt wird, ist biegsam ausgebildet. Die beiden Enden der Führungseinrichtung sind ortsfest gelagert, so daß Reaktionskräfte von der Führungseinrichtung aufgenommen und übertragen werden können. Durch das Übertragungselement (Seil, Draht, Band oder dergleichen) können Zug- und Druckkräfte und Bewegungen übertragen werden. Diese können als mechanische Wegsignale, Stellsignale bzw. Kraftsignale oder dergleichen verwendet werden.

Aufgabe der Erfindung ist es, eine Vorrichtung der eingangs genannten Art zu schaffen, bei welcher eine Steuerung der zu übertragenden Bewegungen und/oder Kräfte erreicht wird.

Diese Aufgabe wird erfindungsgemäß dadurch gelöst, daß die Führungslänge zwischen den beiden Enden der Führungseinrichtung durch Freigabe des Führungseingriffes entlang einer bestimmten Strecke der Führungslänge variabel ausgebildet ist.

Durch die variable Freigabe des Führungseingriffes entlang einer bestimmten Strecke der Führungslänge läßt sich eine Steuerung der Bewegungs- und/oder Kraftübertragung dahingehend steuern, daß keine Bewegung bzw. Kraft übertragbar ist oder eine Kraft- bzw. Bewegungsübertragung nach einer bestimmten Bewegung des Übertragungselementes entlang der Führungslänge beginnt oder die Bewegungs- und Kraftübertragung während des gesamten Bewegungsvorganges des Übertragungselementes erfolgt. Somit bestimmt bei Freigabe des Führungseingriffes die eingestellte Veränderung der variablen Führungslänge die Bewegungs- und/oder Kraftübertragungsmöglichkeit der erfindungsgemäßen Vorrichtung.

In bevorzugter Weise besitzt die Führungseinrichtung zwischen ihren beiden Enden ein Führungsteil, dessen Führungseingriff mit dem Übertragungselement lösbar ist. Dieses Führungsteil kann in Form einer Umlenkeinrichtung, insbesondere Umlenkrolle, welche nach außen hin offen ist, ausgebildet sein. Durch Verschieben des Führungsteils bzw. Umlenkteils kann der Führungseingriff (Formschluß) mit dem Übertragungselement gelöst werden, so daß bei einer Bewegung des Übertragungselementes ein Leerhub entsteht, während welchem keine Bewegung und/oder Kraft übertragen wird.

In bevorzugter Weise kann das Führungsteil (Umlenkrolle oder dergleichen) in mehreren Positionen bezüglich des Übertragungselementes arretiert werden, so daß man verschiedene Positionen einstellen kann, bei welchen ein Weg- bzw. Kraftsignal vom Übertragungselement übertragen wird.

Die vom Führungsteil gebildete Umlenkstelle ist in bevorzugter Weise so ausgebildet, daß das Übertragungselement um 180° umgelenkt wird. Das in länglicher Form (Seil, Draht, Band oder dergleichen) ausgebildete Übertragungselement bildet an der Umlenkstelle eine offene Schleife mit im wesentlichen parallel verlaufenden Übertragungsteilen, die von den beiden Enden der Führungseinrichtung kommen. Innerhalb dieser Schleife kann das Führungsteil in vorgegebene Rastpositionen verschoben werden. Hierdurch erreicht man ein Verändern der Führungslänge, innerhalb welcher ein Formschluß bzw. ein Führungseingriff zwischen Übertragungselement und Führungseinrichtung besteht. Durch das voreingestellte Spannen und Freigeben des Übertragungselementes erreicht man die gewünschte Steuerung der vom einen Ende der Führungseinrichtung zum anderen Ende der Führungseinrichtung hin zu übertragenden Weg- und/oder Kraftsignale.

Anhand der Figuren wird an einem Ausführungsbeispiel die Erfindung noch näher erläutert. Es zeigt
- Fig. 1: eine Gesamtansicht eines Ausführungsbeispiels;
- Fig. 2: in perspektivischer auseinandergezogener Stellung die Einzelteile einer Verstelleinrichtung zur variablen Freigabe des Führungseingriffes zwischen Übertragungselement und Führungseinrichtung; und
- Fig. 3: die Verstelleinrichtung im Zusammenbau.

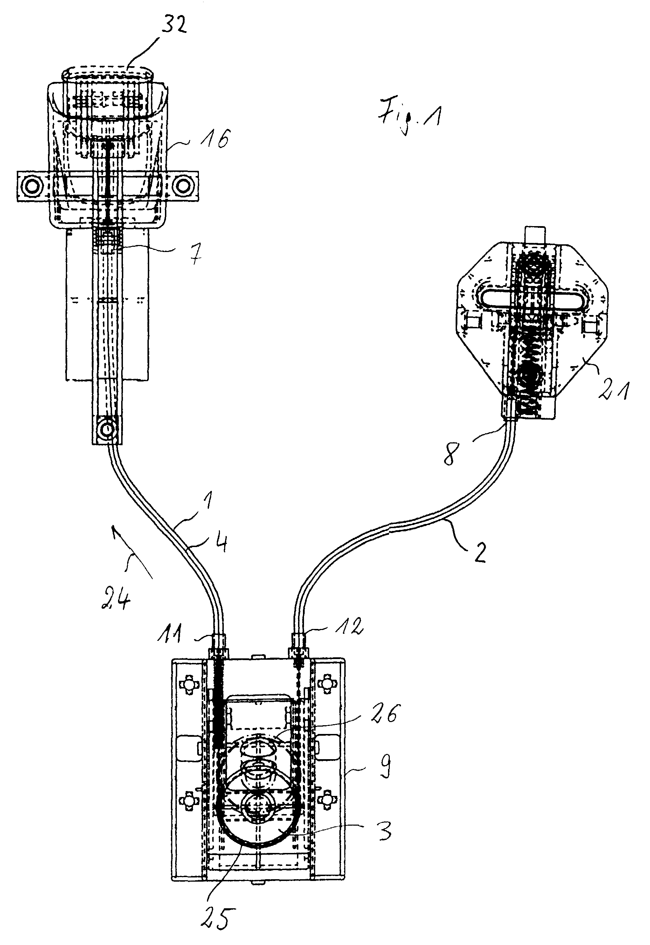

Das in Fig. 1 in Gesamtansicht dargestellte Ausführungsbeispiel besitzt ein Übertragungselement 4, welches an seinem einen Ende mit einer Betätigungseinrichtung 16 zur Erzeugung eines Weg- oder Kraftsignales, welches vom Übertragungselement 4 auf eine Empfangseinrichtung 21 übertragen werden soll, verbunden ist. Das Übertragungselement, welches als Seil, Draht, Band oder dergleichen ausgebildet sein kann, wird formschlüssig in einer ersten biegsamen Führungshülse 1 zwischen der Betätigungseinrichtung 16 und einer Verstelleinrichtung 9 geführt. Zwischen der Verstelleinrichtung 9 und der Empfangseinrichtung 21 wird das Übertragungselement 4 formschlüssig in einer zweiten Führungshülse 2 geführt. Die Führungshülsen 1 und 2 sind bevorzugt als biegsame Führungskörper ausgebildet. Die erste Führungshülse 1 ist an einem Führungsteilende 7 fest an der als mechanische Sender für ein Weg- bzw. Kraftsignal wirkenden Betätigungseinrichtung 16 und an ihrem anderen Ende 11 an der Verstelleinrichtung 9 ortsfest abgestützt. Die zweite Führungshülse 2 ist mit ihrem einen Ende 12 ortsfest an der Verstelleinrichtung 9 und mit ihrem anderen Ende 8 ortsfest an der Empfangseinrichtung 21 abgestützt. Die beiden Führungshülsen 1 und 2 umfassen das ebenfalls biegsam ausgebildete Übertragungselement 4, welches frei verschiebbar in den Führungshülsen 1 und 2 bevorzugt mit Formschluß gelagert ist.

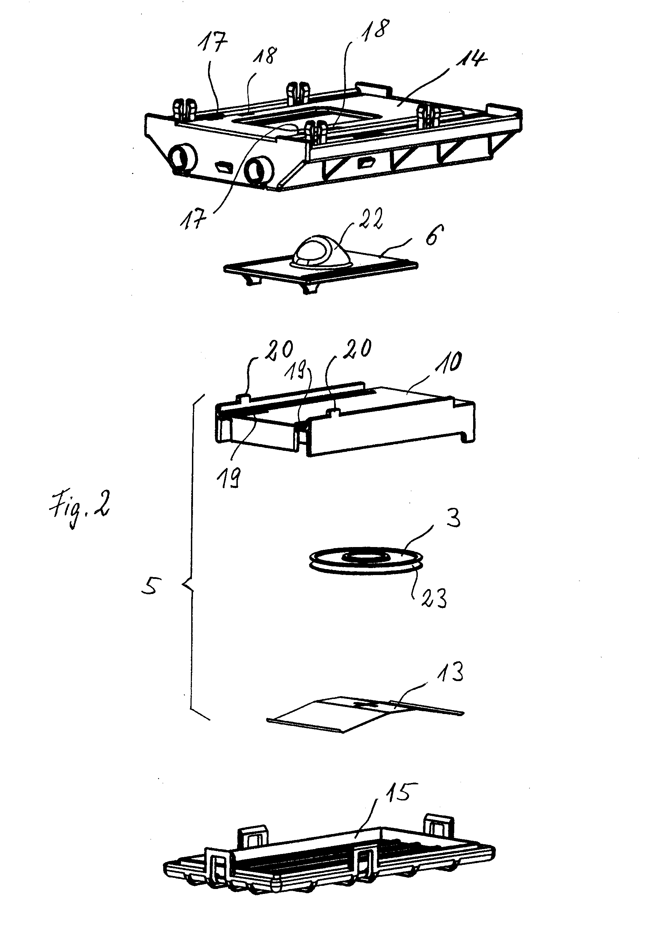

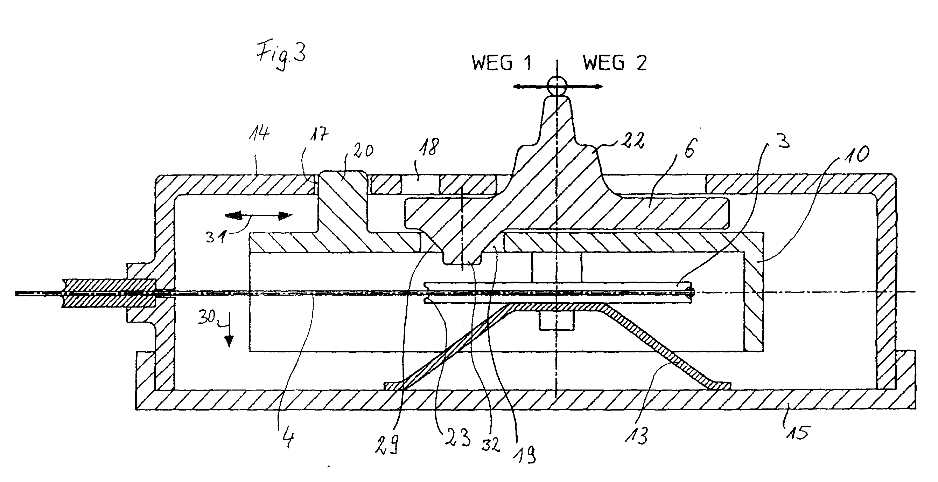

In der Verstelleinrichtung 9, deren Einzelteile in der Fig. 2 und deren Zusammenbau in der Fig. 3 dargestellt sind, wird das Übertragungselement 4 über ein als Umlenkrolle 3 ausgebildetes offenes Führungsteil geführt. Anstelle der Umlenkrolle 3 kann für das offene Führungsteil auch eine nach außen hin offene Umlenkbahn verwendet werden, welche wie die Führungsrolle 3 innerhalb der Verstelleinrichtung 9 in zwei oder mehr Rastpositionen einstellbar und verschiebbar angeordnet ist. Die Umlenkrolle 3 bildet eine Umlenkstelle, um welche das Übertragungselement 4 in einem Winkel von 180° umgelenkt wird. Der von der Betätigungseinrichtung 16 kommende und in der Verstelleinrichtung 9 verlaufende Abschnitt des Übertragungselements 4 sowie der zur Empfangseinrichtung 21 in der Verstelleinrichtung 9 geführte Abschnitt des Übertragungselements 4 verlaufen im wesentlichen parallel zueinander und bilden mit dem um die Umlenkrolle 3 geführten Abschnitt des Übertragungselements 4 eine offene Schlaufe des Übertragungselementes 4, innerhalb welcher die Umlenkrolle 3 verschiebbar und in mehreren Rastpositionen verrastbar angeordnet ist.

Die Verstelleinrichtung 9 besitzt hierzu eine Halterung 5 für die Umlenkrolle 3. Die Halterung 5 besteht im wesentlichen aus einem Halter 10 und einer Feder 13, welche an einem Deckel 15 abgestützt ist. Die Umlenkrolle 3 ist am Halter 10, auf den die Feder 13 wirkt, angeordnet. Der Deckel 15 wird beispielsweise durch Aufklipsen am Gehäuse 14 befestigt. Das Gehäuse 14 ist ortsfest an einer Unterlage angeordnet.

Mit Hilfe eines am Gehäuse 14 geführten Schiebers 6 kann der Halter 10 und damit die Umlenkrolle 3 gegenüber dem Gehäuse 14 und dem Deckel 15 verschoben werden. Beim dargestellten Ausführungsbeispiel kann die Umlenkrolle 3 zwischen zwei Rastpositionen (Übertragungsposition 25 und Leerhubposition 26) verschoben werden. Falls es für den Anwendungszweck erforderlich ist, können auch mehrere Rastpositionen vorgesehen sein. Zur Bestimmung der Rastpositionen sind im Gehäuse Rastschlitze 17, 18 angeordnet. In der jeweiligen Rastposition werden durch die Kraft der Feder 13, die über die Umlenkrolle 3 auch auf den Hafer 10 wirkt, am Halter 10 angeformte Rastnocken 20 in die jeweiligen Rastschlitze 17 bzw. 18 des Gehäuses zur Arretierung der Halterung 5 eingedrückt. Auf diese Weise erreicht man durch die Feder 13 eine selbsttätige Arretierung des Trägers 10 am Gehäuse 14 beim Überfahren der jeweiligen Rastschlitze 17 bzw. 18 im Gehäuse 14.

Zur Verschiebung der Umlenkrolle 3 wird der Schieber 6 zur Mitnahme des Trägers 10 betätigt (Weg 1 oder Weg 2 in Fig. 3). Am Schieber 6 kann hierzu ein Betätigungselement 22 vorgesehen sein. Der Schieber 6 greift in den Träger 10 über Schrägrippen 29 in Mitnahmeschlitze 19 des Trägers 10 ein, so daß eine oder mehrere Schrägrippen 29 bei horizontalem Versatz zwischen dem Schieber 6 und dem Träger 10 einen dazu vertikalen Hub (Pfeil 30) des Trägers 10 gegenüber dem Gehäuse 14 gegen die Rückstellkraft der Feder 13 verursacht. Hierdurch werden gegen die Rückstellkraft der Feder 13 die Rastnocken 20 aus den jeweiligen Rastschlitzen 17 bzw. 18 im Gehäuse gehoben, und ein Verschieben (Doppelpfeil 31) des Trägers 10 mit der Umlenkrolle 3 gegenüber dem Gehäuse 14 ist möglich. In Abhängigkeit vom Schrägungswinkel der Schrägrippen 29 kann der Entriegelungshub (Pfeil 30) für den Träger 10 eingestellt werden. Die Schrägrippen 29 besitzen an ihren jeweiligen Enden Rastnocken 32. Hierdurch wird gewährleistet, daß nach dem Verkippen des Trägers 10 für den Entriegelungshub der Eingriff in den Mitnahmeschlitzen 19 des Trägers 10 verbleibt. Hierdurch wird beim Versetzen (Weg 1, Weg 2) des Schiebers 6 der Träger 10 mitgeführt. Sobald der Träger 10 mit seinen Rastnocken 20 den Rastschlitzen 17 bzw. 18 des Gehäuses 14 gegenüberliegt, werden diese selbsttätig durch die Wirkung der Feder 13 in die Rastschlitze 17 bzw. 18 gedrückt.

In der einen Raststellung (Übertragungsposition 25) der Umlenkrolle 3 befindet sich der gebogene Teil des Übertragungselementes 4 in einer umlaufenden Führungsrille 23 an der Umlenkrolle 3. Wenn von der Betätigungseinrichtung 16 ein Bewegungs- oder Kraftsignal beispielsweise durch Zugeinwirkung in Richtung eines Pfeiles 24 (siehe Fig. 1) auf das Übertragungselement 4 ausgeübt wird, wird dieses aufgrund des Formschlusses bzw. Führungseingriffes, den das Übertragungselement 4 nicht nur entlang der beiden Führungshülsen 1 und 2, sondern auch im Bereich der Umlenkrolle 3 auf die Empfangseinrichtung 21 hat, übertragen. Die Empfangseinrichtung 21 kann das Weg- bzw. das Kraftsignal für einen Stellvorgang, für einen Verriegelungsvorgang oder dergleichen auswerten. Die Umlenkrolle 3 nimmt hierzu die in Fig. 1 dargestellte Übertragungsposition 25 ein. Wenn die Umlenkrolle 3 in die andere Rastposition (Leerhubposition 26) verschoben ist, befindet sich die Umlenkschleife des Übertragungselementes 4 außer Eingriff mit der Führungsrille 23 der Umlenkrolle 3. Ein Bewegungs- bzw. Kraftsignal, welches von der Betätigungseinrichtung 16 abgegeben wird, wirkt sich als Leerhub in der Verstelleinrichtung 9 aus, so daß dieses Signal über den Teil des Übertragungselementes 4, der sich in der zweiten Führungshülse 2 befindet, nicht übertragen wird. Das von der Betätigungseinrichtung 16 erzeugte Signal wird daher an die Empfangseinrichtung 21 nicht weitergegeben.

Die Umlenkrolle 3 kann zwischen den beiden Rastpositionen 25 und 26 noch Zwischenpositionen einnehmen, die beispielsweise eine Memoryfunktion für Verstellbewegungen haben können. Diese Zwischenpositionen wirken sich dann so aus, daß während einer von der Betätigungseinrichtung 16 auf das Übertragungselement 4 ausgeübten Anfangsbewegung keine Übertragung erfolgt, sondern die Umlenkschleife des Übertragungselementes 4 einen Leerhub ausführt, bis sie in Eingriff mit der Führungsrille 23 der Umlenkrolle 3 kommt. Weitere von der Betätigungseinrichtung 16 verursachte Bewegungs- bzw. Kraftsignale werden dann auch auf den Teil des Übertragungselementes 4 übertragen, der in der zweiten Führungshülse 2 geführt ist und erreichen somit die Empfangseinrichtung 21.

Eine bevorzugte Anwendung der Vorrichtung erfolgt zur Diebstahlsicherung von beispielsweise Autotürschlössern. Hierzu kann beispielsweise der Leerhub, den die Umlenkschleife des Übertragungselementes 4 in der Verstelleinrichtung 9 ausführt, zur Erzielung einer Sicherungsfunktion eines Schlosses, welches die Empfangseinrichtung 21 bildet, ausgenützt werden, wenn die Betätigungseinrichtung 16 über einen auf der Innenseite der Autotür angebrachten Ver- und Entriegelungsknopf 32 unerwünschterweise betätigt wird, und dieses Betätigung jedoch keine Türschloßentriegelung bewirken soll.

Ferner kann die Vorrichtung als Überlastschutz für die Empfangseinrichtung 21 oder die Verstelleinrichtung 9 dienen. Wird in der Empfangseinrichtung 21 durch Blockieren eines Stellkörpers das Wegsignal unterbunden, so können hohe Mißbrauchskräfte zu Schäden im System führen. Wird eine in Abhängigkeit vom Schrägwinkel der Schrägrippen 29 und zur Feder 13 einstellbare Ausrückkraft, welche entgegengesetzt zur Federkraft wirkt, überschritten, so verstellt sich der Träger 10 und gibt das Übertragungselement 4 frei. Die Betätigungseinrichtung 16 führt dann einen Leerhub bis zum Anschlag aus, wodurch das System entlastet wird.

## Patentansprüche

1. Vorrichtung zum Übertragen einer Bewegung und/oder Kraft mit einer Führungseinrichtung und einem Übertragungselement, welches in der Führungseinrichtung mit Führungseingriff (Formschluß) verschiebbar gelagert ist und die Bewegung und/oder Kraft entlang einer durch die Enden der Führungseinrichtung bestimmten Führungslänge überträgt,
dadurch gekennzeichnet,
daß die Führungslänge zwischen den beiden Enden (7,8) der Führungseinrichtung (1-3) durch Freigabe des Führungseingriffes entlang einer bestimmten Strecke der Führungslänge variabel ausgebildet ist.

2. Vorrichtung nach Anspruch 1, dadurch gekennzeichnet, daß die Führungseinrichtung (1-3) zwischen ihren beiden Enden (7,8) ein offenes Führungsteil (3) aufweist, dessen Führungseingriff mit dem Übertragungselement (4) lösbar ist.

3. Vorrichtung nach Anspruch 2, dadurch gekennzeichnet, daß das offene Führungsteil (3) als Umlenkstelle für das Übertragungselement (4) ausgebildet ist.

4. Vorrichtung nach Anspruch 2 oder 3, dadurch gekennzeichnet, daß das offene Führungsteil (3) für eine Freigabe des Führungseingriffes beweglich gelagert ist.

5. Vorrichtung nach einem der Ansprüche 1 bis 4, dadurch gekennzeichnet, daß bei Freigabe des Führungseingriffes die Bewegung und/oder die Kraft nicht übertragbar ist.

6. Vorrichtung nach einem der Ansprüche 1 bis 5, dadurch gekennzeichnet, daß das Führungsteil (3) an einer Halterung (5) gelagert und in zwei oder mehreren Positionen bezüglich des Übertragungselementes (4) arretierbar ist.

7. Vorrichtung nach einem der Ansprüche 1 bis 6, dadurch gekennzeichnet, daß das Führungsteil (3) mittels eines Schiebers (6) verstellbar ist.

8. Vorrichtung nach einem der Ansprüche 1 bis 7, dadurch gekennzeichnet, daß das Führungsteil (3) mittels Federkraft (Feder 13) arretierbar ist.

9. Vorrichtung nach einem der Ansprüche 1 bis 8, dadurch gekennzeichnet, daß das Übertragungselement (4) durch die vom offenen Führungsteil (3) gebildete Umlenkstelle um 180° umgelenkt ist.

10. Vorrichtung nach einem der Ansprüche 1 bis 9, dadurch gekennzeichnet, daß zwischen den beiden Enden (7,8) der Führungseinrichtung (1-3) und dem offenen Führungsteil (3) zwei schlauchförmige Führungsteile (1,2) für das Übertragungselement (4) vorgesehen sind.

11. Vorrichtung nach Anspruch 10, dadurch gekennzeichnet, daß Führungsteilenden (7,11 und 8,12) der beiden schlauchförmigen Führungsteile (1,2) für eine Aufnahme von Reaktionskräften ortsfest angeordnet sind.

12. Vorrichtung nach einem der Ansprüche 1 bis 11, dadurch gekennzeichnet, daß das offene Führungsteil (3) als Umlenkrolle ausgebildet ist.

13. Vorrichtung nach einem der Ansprüche 1 bis 12, dadurch gekennzeichnet, daß das Übertragungselement (4) als Seil oder Band ausgebildet ist.

14. Vorrichtung nach einem der Ansprüche 1 bis 13, dadurch gekennzeichnet, daß ein Träger (10) für das offene Führungsteil (3) durch den Schieber (6) gegen die arretierende Federkraft (Feder 13) aus einer arretierten Position bewegbar ist.
